Europäisches Patentamt

European Patent Office

Office européen des brevets

(11) Veröffentlichungsnummer : **0 131 122**
**B1**

(12) **EUROPÄISCHE PATENTSCHRIFT**

(45) Veröffentlichungstag der Patentschrift :
07.03.90

(21) Anmeldenummer : 84105729.2

(22) Anmeldetag : 19.05.84

(51) Int. Cl.⁵ : **B 29 C 47/04// B29L30/00,**
**B29C47/14**

(54) **Presskopf zum Herstellen von flachen zusammenhängenden Profilsträngen aus plastischen Kautschuk- oder Kunststoffmischungen verschiedener Zusammensetzung.**

(30) Priorität : 11.07.83 DE 3325017

(43) Veröffentlichungstag der Anmeldung :
16.01.85 Patentblatt 85/03

(45) Bekanntmachung des Hinweises auf die Patenterteilung : 07.03.90 Patentblatt 90/10

(84) Benannte Vertragsstaaten :
AT BE CH DE FR GB IT LI LU NL SE

(56) Entgegenhaltungen :
EP—A— 0 047 146
DE—A— 1 729 608
FR—A— 2 200 109
US—A— 3 331 900
US—A— 4 272 312
KAUTSCHUK UND GUMMI KUNSTSTOFFE, Band 36,
Nr. 1, Januar 1983, Seiten 27-31, Heidelberg, DE; W.
RÜGER: "Anlage zur Herstellung von Zwei- oder
Drei-Komponenten-Laufstreifen und -Seitenstreifen
für die Reifenindustrie"

(73) Patentinhaber : **Continental Aktiengesellschaft**
**Königsworther Platz 1**
**D-3000 Hannover 1 (DE)**

(72) Erfinder : **Sievers, Willi, Dipl.-Ing.**
**Kölner Strasse 4**
**D-3540 Korbach (DE)**
Erfinder : **Schlüter, Hartwig, Dipl.-Ing.**
**Giessener Strasse 6**
**D-3540 Korbach (DE)**
Erfinder : **de Vries, Gerhard, Dr. Dipl.-Ing.**
**im Hespe 36**
**D-3008 Garbsen 4 (DE)**

## Beschreibung

Die Erfindung bezieht sich auf einen Preßkopf zum Herstellen von flachen zusammenhängenden Profilsträngen aus plastischen Kautschuk- oder Kunststoffmischungen verschiedener Zusammensetzung, insbesondere von Rohlaufstreifen für Luftreifen, gemäß dem Oberbegriff des Patentanspruchs 1. Ein derartiger Preßkopf ist aus der DE-A-1 729 608 bekannt.

Es ist seit langem übliche Praxis, Profilstränge durch Vereinigung der von mehreren Strangpressen geförderten Teilströme in einem gemeinsamen Mundstück zusammenhängend herzustellen, und mit Vorteil wird von dieser Möglichkeit insbesondere auch zum Vorformen der Rohlaufstreifen für Fahrzeugluftreifen Gebrauch gemacht, für deren Lauffflächenbereich vorwiegend Abriebbeständigkeit gefordert wird, während für die Seitenteile in erster Linie Flexibilität und Rißfestigkeit vorausgesetzt werden, so daß sie grundsätzlich aus mindestens zwei verschiedenen Elastomer-Mischungen zusammengesetzt sein müssen. Dabei kann das einwandfreie Zusammenführen der Teilprofilstränge in dem die Strangpressen vereinigenden Preßkopf erhebliche Probleme aufwerfen, zu deren Lösung sich in der Praxis beispielsweise ein aus der DE-C-1 729 599 bekannter Preßkopf bewährt hat.

Eine weitere Erschwernis brachte der seit kurzem in der Technik der Reifenkonfektionierung entstandene Wunsch nach dem Ausrüsten der Laufstreifen mit vergleichsweise schmalen Randteilen aus einer zusätzlichen besonders bindefreudigen Mischung mit sich. Der weite Abstand dieser Randteile voneinander erwies sich in strömungstechnischer Hinsicht als außerordentlich ungünstig ; denn trotz sorgfältigem Abstimmen aller Strömungswege aufeinander unter Anwendung eingebauter Strömungsbremsen traten immer wieder Unregelmäßigkeiten auf, die sich in mangelnder Bindung und Ablöseerscheinungen an den Rändern der Laufstreifen äußerten. Da diese Ränder am fertigen Reifen die hochbeanspruchten Schulterpartien bilden, führt eine mangelhafte Bindung in diesen Zonen nicht nur zu Störungen in der Produktion der Rohlaufstreifen, sondern auch zu einer Beeinträchtigung der Qualität der Endprodukte, also der fertigen Reifen.

Der Erfindung liegt daher die Aufgabe zugrunde, die Strömungsverhältnisse in einem drei Strangpressen zugeordneten gemeinsamen Preßkopf als Voraussetzung für das angestrebte Zusammenfließen und einwandfreie Verschweißen zu vergleichmäßigen und damit die Herstellung besonders leistungsfähier Laufstreifen zu ermöglichen.

Diese Aufgabe wird erfindungsgemäß durch einen Preßkopf der eingangs genannten Gattung gelöst, der die im kennzeichnenden Teil des Patentanspruchs 1 angegebenen Merkmale aufweist.

Zweckmäßig sind in dem erfindungsgemäßen Preßkopf sowohl der Verbindungskanal als auch die beiden Zweigkanäle im wesentlichen geradlinig und parallel zueinander ausgerichtet, wobei gemäß Varianten der Erfindung die beiden Zweigkanäle auch in einem stumpfen Winkel nach Art einer Pfeilspitze gegeneinander ausgerichtet oder nach einem Kreisbogen gekrümmt sein können. In allen Fällen ist es von Vorteil, wenn die Zweigkanäle einen Durchgangsquerschnitt von jeweils dem halben Durchgangsquerschnitt des Verbindungskanals aufweisen.

Mit der neuartigen Anordnung der der dritten Strangpresse zugehörigen Verbindungs- und Zweigkanäle gelingt es überraschend, die maßgeblichen rheologischen Bedingungen zu beherrschen und damit die Grundsatzvoraussetzungen für die Herstellung mehrteilig aufgebauter Profilstränge gleichmäßiger Beschaffenheit mit in allen Bereichen einwandfreier Bindung der verschiedenen Teilströme untereinander zu schaffen. Die zunächst umständlich erscheinende Strömungsführung der zusätzlichen dritten Strangpresse hat eine nicht ohne weiteres zu erwartende gleichmäßige Masseverteilung auf beide Randteile zur Folge, womit im Endergebnis auch die bisher vorherrschenden Bindungsschwierigkeiten überwunden sind. Diese günstige Wirkung der Erfindung ist unabhängig von wechselnden Betriebsbedingungen und anderen äußeren oder inneren Einflußgrößen jederzeit wiederholbar.

Die Erfindung ist anhand der schematischen Darstellung eines Ausführungsbeispiels in der Zeichnung verdeutlicht. In der Zeichnung ist :

Fig. 1 eine Seitenansicht eines neuartigen Preßkopfes mit angedeutetem inneren Strömungsverlauf, teilweise im Schnitt,

Fig. 1a eine Einzelheit aus Fig. 1, und zwar ein Schnitt nach der Linie Ia-Ia von Fig. 2,

Fig. 2 die Vorschablone und deren Ankopplung gegen die Spritzrichtung gesehen,

Fig. 3 ein Querschnitt durch einen dreifach zusammengesetzten Rohlaufstreifen in gegenüber Fig. 1 und 2 vergrößertem Maßstab.

Der gezeichnete Preßkopf 4 bildet den vorderen Abschluß zweier unter einem spitzen Winkel übereinandergesetzter Schneckenpressen 5 und 6, deren Strömungskanäle 15, 16 in an sich bekannter Weise mit mit abnehmender Querschnittshöhe sich vergrößernder Breite sich in Auspreßrichtung zunehmend einander annähern, bis sie nach Passieren der Vorschablone 8 in dem endgültig formgebenden Mundstück 9 ineinander übergehen. Seitlich um 90° gegen die Schneckenpressen 5, 6 versetzt ist eine dritte Schneckenpresse 7 an die Vorschablone 8 angesetzt, die unmittelbar in einen nach außen sich öffnenden Verbindungskanal 17 fördert. Der Verbindungskanal 17 führt geradlinig in den Kern der Vorschablone bis zu einem Punkt oberhalb der Strömungskanäle 15, 16 in einer mit deren Mittellinie zusammenfallenden Ebene, wo er in einem kurzen Winkelstück 17a um 90° nach unten abbiegt und sich in zwei die Strömungskanäle 15, 16 umfassende Zweigkanäle 27 aufgliedert. In dem gezeichneten Ausführungsbeispiel verlaufen die Zweigkanäle 27 parallel zu dem Verbindungskanal 17 wie auch den Strömungskanälen 15, 16. Es wäre aber denkbar und ohne Wirkungseinbußen auch möglich, sie etwa dachkantenartig unter einem stumpfen Winkel gegeneinander oder nach einem Kreisbogen symmetrisch gekrümmt auszurichten. Sie münden beide in den Seitenbereichen der Strömungskanäle 15, 16 in Bohrungen 37, die in weiterer Folge in die die Randteile der Profilstränge abformenden Ausnehmungen in dem Mundstück 9 übergehen.

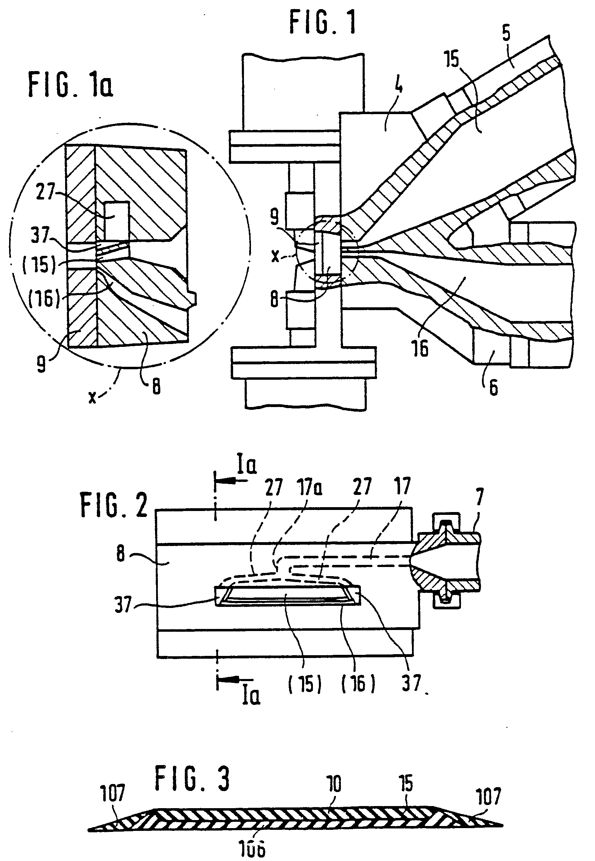

Der beschriebene Preßkopf dient zum Herstellen von Laufstreifen 10 der in Fig. 3 im Querschnitt gezeichneten Zusammensetzung : Auf einen Fußstreifen 106 ist der Laufflächenteil 105 aufgesetzt, und beide Teile sind von Randstreifen 107 von stumpfwinkelig-dreieckiger Querschnittsform eingefaßt. In Abstimmung auf seine eigene Funktion innerhalb des fertig aufgebauten Luftreifens ist jedes der drei bzw. vier Teile aus einer anderen Kautschukmischung geformt, wobei nur die Randstreifen 107 unter sich gleichartig sind, und alle müssen sie in dem einbaufertig vorliegenden Laufstreifen festhaftend untereinander zusammenhängen. Diese Forderung wird im besonderen Hinblick auf die Randstreifen durch die in Fig. 2 verdeutlichte Führung des Verbindungskanals 17 für die dritte Schneckenpresse 7 und dessen Aufteilung im inneren der Vorschablone 8 in die beiden Zweigkanäle 27 erfüllt. Wichtig ist hierfür auch noch die Abstimmung der Durchgangsquerschnitte aufeinander in der Weise, daß die beiden Zweigkanäle 27 zusammengenommen wenigstens angenähert die Strömungskapazität des einfachen Verbindungskanals 17 aufweisen.

## Patentansprüche

1. Preßkopf zum Herstellen von flachen zusammenhängenden Profilsträngen aus plastischen Kautschuk- oder Kunststoffmischungen verschiedener Zusammensetzung, insbesondere von Rohlaufstreifen (10) für Luftreifen mit einem zweischichtigen Mittelteil (105, 106) und zwei untereinander gleichartigen Randteilen (107), mit zwei unter einem spitzen Winkel über- oder nebeneinander angeordneten Strangpressen (5, 6), die an eine mit einem gemeinsamen Auspreßmundstück (9) verbundene Vorschablone (8) mit übereinander verlaufenden Strömungskanälen (15, 16) angeschlossen sind, und mit einer seitlich an die Vorschablone (8) angesetzten dritten Strangpresse (7), von deren quer zu den Strömungskanälen (15, 16) verlaufendem Einspeisungskanal (17) Zweigkanäle (27) abgehen, die im Bereich des Preßkopfmundstücks (9) mit den Strömungskanälen (15, 16) zusammengeführt sind, dadurch gekennzeichnet, daß der Einspeisungskanal (17) der dritten Strangpresse (7) als einfacher Verbindungskanal bis in den Mittenbereich der Vorschablone (8) ober- oder unterhalb der den beiden anderen Strangpressen (5, 6) zugeordneten Strömungskanäle (15, 16) geführt ist, wo sich ein 90°-Umlenkwinkel (17a) anschließt, der sich in Strömungsrichtung in zwei etwa gleichlange und jeweils etwa seinem halben Strömungsquerschnitt entsprechende Zweigkanäle (27) aufgabelt, die in zwei die Strömungskanäle (15, 16) beidseitig umfassende, den Randteilen (107) des Laufstreifens (10) zugeordnete Randkanäle (37) übergehen.

2. Preßkopf nach Anspruch 1, dadurch gekennzeichnet, daß der Verbindungskanal (17) und die beiden Zweigkanäle (27) im wesentlichen geradlinig und parallel zueinander ausgerichtet sind.

3. Preßkopf nach Anspruch 1, dadurch gekennzeichnet, daß der Verbindungskanal (17) und die beiden Zweigkanäle (27) im wesentlichen geradlinig geführt und die Zweigkanäle in einem stumpfen Winkel gegeneinander ausgerichtet sind.

4. Preßkopf nach Anspruch 1, dadurch gekennzeichnet, daß der Verbindungskanal (17) geradlinig und die beiden Zweigkanäle (27) nach einem Kreisbogen gekrümmt geführt sind.

## Claims

1. Extrusion head for producing flat and continuous extruded profiles from plastic, variously composed mixtures of rubber or plastics material, more especially untreated tread strips (10) for pneumatic tyres having a double-layered central portion (105, 106) and two edge portions (107), which are similar to each other, such head comprising two extrusion presses (5, 6), which are disposed above or adjacent each other at an acute angle relative to each other and are connected to a front template (8), which is connected to a common extrusion nozzle (9) and is provided with flow channels (15, 16) which extend one above the other, and comprising a third extrusion press (7), which is attached laterally to the front template (8), the feed channel (17) of the third extrusion press extending transversely relative to the flow channels (15, 16), and branch channels (27) extend from said feed channel and are combined with the flow channels (15, 16) in the region of the extrusion nozzle (9), characterised in that the feed channel (17) of the third extrusion press (7) extends, as a single connecting channel, into the central region of the front template (8) above or below the flow channels (15, 16) associated with the other two extrusion presses (5, 6), a 90° angular portion (17a) communicating with said central region and being bifurcated in the direction of flow into two branch channels (27) of substantially equal lengths, each branch channel corresponding substantially to half the cross-section of flow of said angular portion, which branch channels (27) extend into two edge channels (37), which enclose the flow channels (15, 16) on each side and are associated with the edge portions (107) of the tread strip (10).

2. Extrusion head according to claim 1, characterised in that the connecting channel (17) and the two branch channels (27) are orientated substantially in a straight line and parallel to one another.

3. Extrusion head according to claim 1, characterised in that the connecting channel (17) and the two branch channels (27) extend substantially in a straight line, and the branch channels are orientated at an obtuse angle relative to each other.

4. Extrusion head according to claim 1, characterised in that the connecting channel (17) extends in a straight line, and the two branch channels (27) extend in an arcuately curved manner.

**Revendications**

1. Tête d'extrusion pour fabriquer des profilés plats continus constitués par un mélange plastique de caoutchoucs ou de matières plastiques possédant des compositions différentes, notamment de boudins de mélange de bande de roulement (10) pour des pneumatiques comportant une partie centrale (105, 106) formée de deux couches et deux parties marginales identiques (107), et comportant deux extrudeuses (5, 6), qui sont superposées ou juxtaposées en faisant un angle aigu entre elles et sont fermées, au niveau d'un gabarit amont (8) relié à un élément commun d'embouchure d'éjection (9), par des capots d'écoulement superposés (15, 16), et une troisième extrudeuse (7), qui est installée latéralement à côté du gabarit amont (8), et dans laquelle des canaux de dérivation (27), qui sont réunis aux canaux d'écoulement (15, 16) au voisinage de l'embouchure (9) de la tête d'extrusion, partent du canal d'injection (17) de la troisième extrudeuse, qui s'étend transversalement par rapport aux canaux d'écoulement (15, 16), caractérisée en ce que le canal d'injection (17) de la troisième extrudeuse (7) s'étend, sous la forme d'un simple canal de liaison, jusque dans la zone médiane du gabarit amont (8) située au-dessus ou au-dessous des deux canaux d'écoulement (15, 16) associés aux deux autres extrudeuses (5, 6), et où se raccorde un coude de renvoi à 90° (17a), qui se ramifie, dans la direction d'écoulement, en deux canaux de dérivation (27), qui possèdent approximativement la même longueur et une section transversal d'écoulement correspondant approximativement à la moitié de la section transversale d'écoulement de ce coude et se prolongent par deux canaux marginaux (37) enserrant des deux côtés les canaux d'écoulement (15, 16) et associés aux éléments marginaux (107) de la bande de roulement (10).

2. Tête d'extrusion selon la revendication 1, caractérisée en ce que le canal de liaison (17) et les deux canaux de dérivation (27) sont sensiblement rectilignes et parallèles entre eux.

3. Tête d'extrusion selon la revendication 1, caractérisée en ce que le canal de liaison (17) et les deux canaux de dérivation (27) sont sensiblement rectilignes et que les canaux de dérivation font entre eux un angle obtus.

4. Tête d'extrusion selon la revendication 1, caractérisée en ce que le canal de liaison (17) est rectiligne et que les deux canaux de dérivation (27) sont cintrés en forme d'arc de cercle.

FIG. 1

FIG. 1a

FIG. 2

FIG. 3